## Europäisches Patentamt

## European Patent Office

## Office européen des brevets

(19)

(11) Veröffentlichungsnummer: **0 234 386**
**B1**

(12)

## EUROPÄISCHE PATENTSCHRIFT

(45) Veröffentlichungstag der Patentschrift:
12.09.90

(51) Int. Cl.⁵: **H04J 3/06**

(21) Anmeldenummer: **87101771.1**

(22) Anmeldetag: **09.02.87**

(54) Rahmendekodierung.

(30) Priorität: **10.02.86  DE 3604183**

(43) Veröffentlichungstag der Anmeldung:
**02.09.87 Patentblatt 87/36**

(45) Bekanntmachung des Hinweises auf die Patenterteilung:
**12.09.90 Patentblatt 90/37**

(84) Benannte Vertragsstaaten:
**AT BE CH DE FR GB IT LI NL SE**

(56) Entgegenhaltungen:
**DE-A- 3 132 198**
**US-A- 3 541 456**
**US-A- 4 002 845**

(73) Patentinhaber: **Siemens Aktiengesellschaft,
Wittelsbacherplatz 2, D-8000 München 2(DE)**

(72) Erfinder: **Schwierz, Theodor, Dipl.-Ing., Riedweg 11,
D-8890 Aichach(DE)**

ACTORUM AG

**Beschreibung**

Die Erfindung betrifft ein Verfahren zur Rahmendekodierung gemäß dem Oberbegriff des Patentanspruchs 1.

Ein solches Verfahren ist aus der US-PS 4 002 845 bekannt.

In zunehmendem Maße werden in der Übertragungstechnik, insbesondere über Richtfunkstrecken, Digitalsignalgeräte eingesetzt. Solche Geräte erfordern für die zusätzliche Übertragung von Informationsbits für Dienstkanal- und Meldezwecke eine Multiplexer-Demultiplexereinrichtung mit einer sogenannten Überrahmenstruktur.

in der Druckschrift "Multiplexer für 8,448 Mbit/s bei positiv-negativ Stopftechnik" von U. Aßmus und anderen (siehe Mitteilung aus dem Forschungsinstitut des FTZ der Deutschen Bundespost in Darmstadt, veröffentlicht in Nachrichtentechnische Fachberichte 42 (1972), Seite 245 –256) wird folgendes ausgeführt. Die Zusammenfassung mehrerer PCM-Grundsysteme zu einem System zweiter Ordnung für die wirtschaftlichere Übertragung von Digitalsignalen über größere Entfernungen wird als Vorstufe eines digitalen Netzes sinnvoll sein und kann ohne Übertragungsverluste durch Multiplexer gelöst werden. Da in naher Zukunft mit einem synchronen digitalen Netz nicht gerechnet werden kann, dürfte der asynchrone Multiplexer für eine längere Übergangszeit von Bedeutung sein. Der Multiplexer mit "positiv-negativ" Stopftechnik scheint unter den asynchronen Multiplexern eine besondere Bedeutung zu haben.

Im Empfangsteil des Systems Multiplexer-Demultiplexer wird in einer Synchronisiereinrichtung der Gleichlauf zwischen Sender und Empfänger hergestellt. Hierzu wird in allgemein üblicher Weise im Bitstrom ein periodisch wiederkehrendes Synchronisierwort übertragen. Durch das Synchronisierwort erhält der Bitstrom eine Rahmenstruktur, wobei der Beginn jedes Rahmens durch das Synchronisierwort markiert ist.

Wie in der Beschreibung zum Digitalsignal-Multiplexgerät DSMX8/34 der Firma Siemens ausgeführt, wird hier am Anfang des Pulsrahmens ein Rahmenkennungswort bestehend aus 10 Bits verwendet. In der Rahmensynchronisierschaltung wird ein Schieberegister relativ zum Bitstrom solange verschoben, bis über eine Verknüpfungslogik an den Ausgängen des Schieberegisters das Rahmenkennungswort erkannt wird.

Der Erfindung liegt die Aufgabe zugrunde, bei einem Digital-Richtfunkgerät ein Verfahren zur Rahmendekodierung anzugeben, das auch bei auftretenden sogenannten Büschel-Störungen auf der Übertragungsstrecke eine schnelle und sichere Synchronisation des Empfangsgerätes ermöglicht und eine erkannte Synchronkoinzidenz beibehält.

Diese Aufgabe wird erfindungsgemäß durch die im Anspruch 1 angegebenen Merkmale gelöst.

Zyklische Pulsstörungen können totale Ausfälle ganzer Netzteile bewirken. Die Auswirkungen solcher Störungen sind bei postalischen Netzen nicht so gravierend, da eine Neusynchronisation in ca. 1-2 ms erfolgt. Bei verschlüsselter Übertragung dauert dagegen eine Neusynchronisation der Schlüsselgeräte ca. 50-100 ms.

Durch das erfindungsgemäße Verfahren ist die Störsicherheit verbessert, da die Synchronisierinformation gleichmäßig über den Bitstrom verteilt ist.

Dadurch, daß die erfindungsgemäße Schaltungsanordnung während des Suchvorganges und/oder Ausbleiben des Synchronisierbits kein neues Synchronisiersignal erzeugt, sondern das neue Synchronisiersignal erst nach einer vorbestimmten Anzahl von richtig erkannten Synchronisierbits abgegeben wird, ist die Störsicherheit gegen Falschsynchronisation verbessert. Während des Suchvorganges, insbesondere bei Störeinwirkung, wird das einmal erzeugte Synchronisiersignal unverändert weiter abgegeben.

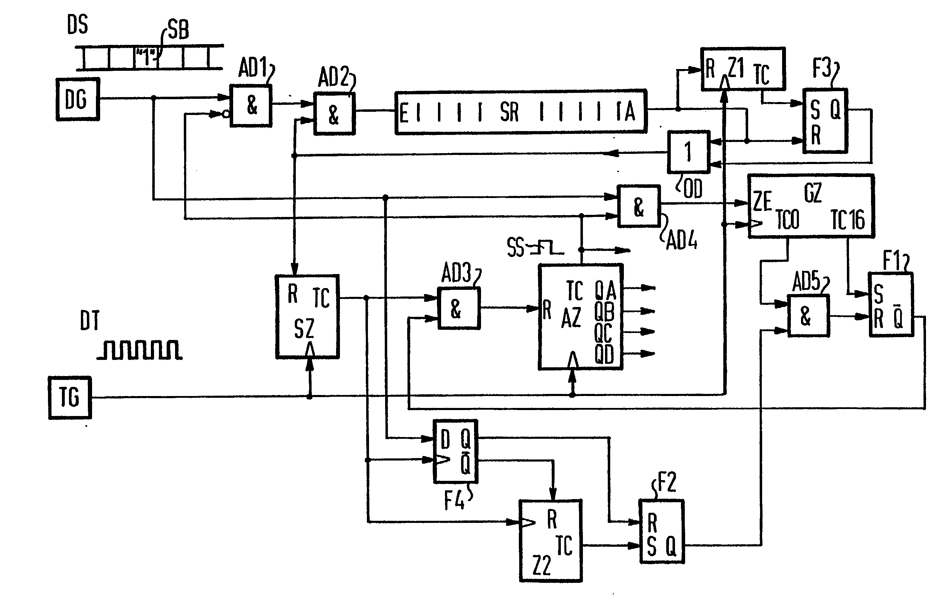

Im folgenden wird die Erfindung anhand eines in der Zeichnung dargestellten Ausführungsbeispieles näher beschrieben.

In der einzigen Figur ist eine Schaltungsanordnung zur Durchführung des erfindungsgemäßen Verfahrens dargestellt. Eine Datenquelle DQ und ein Taktgeber TG sind hierbei Bestandteile der empfangsseitigen Demultiplexereinrichtung. Die Datenquelle DQ gibt einen binären Datenstrom DS ab, der ein periodisch wiederkehrendes Synchronisierbit SB aufweist. Der Datenstrom DS besitzt eine durch die logischen Einsen des Synchronisierbits SB markierte Rahmenstruktur. Der Taktgeber TG gibt einen Datentakt DT ab, dessen ansteigende Flanken beispielsweise in der Mitte der Bits des Datenstromes DS liegen.

Der von der Datenquelle DQ abgegebene Datenstrom DS liegt an dem einen Eingang eines ersten And-Gatters AD1 an. Der Ausgang des ersten And-Gatters AD1 ist mit dem einen Eingang eines zweiten And-Gatters AD2 verbunden, dessen Ausgang an einem Eingang E eines Schieberegisters SR angeschaltet ist. Ein Ausgang A des Schieberegisters SR ist mit dem einen Eingang eines Or-Gatters OD und den Rücksetzeingängen R eines Zählers Z1 und eines dritten RS-Flipflops F3 verbunden. Der Ausgang des Or-Gatters OD, an dessen anderen Eingang ein Ausgang Q des dritten RS-Flipflops angeschaltet ist, ist mit dem anderen Eingang des zweiten And-Gatters AD2 verbunden. Ein Übertragsausgang TC des Zählers Z1 ist mit einem Setzeingang S des dritten RS-Flipflops F3 verbunden.

Der Ausgang A des Schieberegisters SR ist weiter über das Or-Gatter OD mit einem Rücksetzeingang R einer Rahmenerkennungsschaltung verbunden, die durch einen sogenannten Suchzähler SZ realisiert ist. Ein Übertragsausgang TC des Suchzählers SZ ist mit dem einen Eingang eines dritten And-Gatters AD3, mit einem Takteingang eines D-Flipflops F4, und mit einem Takteingang eines weiteren Zählers Z2 verbunden. Der Ausgang des dritten And-Gatters AD 3 ist an einem Rücksetzeingang R eines Rahmengenerators angeschaltet, der durch einen sogenannten Arbeitszähler AZ realisiert ist. Der Arbeitszähler AZ weist in bekannter Weise Ausgänge QA bis QD auf, von denen nicht näher bezeichnete Taktimpulsfolgen abgegeben werden. Von einem Übertragsausgang TC des Arbeitszählers AZ wird ein Synchronisiersignal SS abgegeben, das an dem anderen invertierenden Eingang des ersten And-Gatters AD1 und an dem anderen Eingang eines vierten And-Gatters AD4 anliegt. An dem einen Eingang des vierten And-Gatters AD4 und dem Eingang D des D-Flipflops F4 liegt der Datenstrom DS an.

Der Ausgang des vierten And-Gatters AD4 ist mit einem Zählrichtungseingang ZE eines Gewichtungszähler GZ verbunden. An den Takteingängen des Gewichtungszählers GZ, des Zählers Z1, des Arbeitszählers AZ und des Suchzählers SZ liegt der vom Taktgeber TG abgegebene Datentakt DT an. Der Gewichtungszähler GZ weist einen minimalen Übertragsausgang TC0 und einen maximalen Übertragsausgang TC16 auf. Vom minimalen Übertragsausgang TC0 wird eine logische "1" abgegeben, wenn der Zählerstand des Gewichtungszählers GZ den Wert Null erreicht hat. Vom maximalen Übertragsausgang TC16 wird eine logische "1" abgegeben, wenn der Zählerstand des Gewichtungszählers GZ beispielsweise den Wert 16 erreicht hat. Der Zählerstand des Gewichtungszählers GZ kann nicht kleiner werden als der Wert Null, und nicht größer werden als der Wert 16.

Der minimale Übertragsausgang TC0 des Gewichtungszählers GZ ist mit dem einen Eingang eines fünften And-Gatters AD5, und der maximale Übertragsausgang TC16 ist mit einem Setzeingang S eines ersten RS-Flipflops F1 verbunden. Der Ausgang des fünften And-Gatters AD5 ist an einem Rücksetzeingang R des ersten RS-Flipflops F1 angeschaltet. Ein invertierender Ausgang $\bar{Q}$ des ersten RS-Flipflops F1 ist mit dem anderen Eingang des dritten And-Gatters AD3 verbunden.

Ein Ausgang Q des D-Flipflops F4 ist mit einem Rücksetzeingang R eines zweiten RS-Flipflops F2 verbunden, dessen Ausgang Q am anderen Eingang des fünften And-Gatters AD5 angeschaltet ist. Ein invertierender Ausgang $\bar{Q}$ des D-Flipflops F4 ist mit einem Rücksetzeingang R des weiteren Zählers Z2 verbunden, dessen Übertragsausgang TC an einem Setzeingng S des zweiten RS-Flipflops F2 angeschaltet ist.

Im folgenden wird die grundsätzliche Wirkungsweise des erfindungsgemäßen Verfahrens beschrieben.

Der Suchzähler SZ wird auf das Synchronisierbit SB im Datenstrom DS synchronisiert.

Nach einer vorgegebenen Anzahl von richtig erkannten Synchronisierbits SB übernimmt der Arbeitszähler AZ den Zählerstand des Suchzählers SZ. Der Arbeitszähler AZ gibt das Synchronisiersignal SS und hierzu synchrone Untertakte für den Empfangsteil des Demultiplexers ab. Das Synchronisiersignal SS wird laufend daraufhin überprüft, ob es synchron zum Synchronisierbit SB im Datenstrom DS ist. Das Synchronisiersignal SS wird auch dann abgegeben, wenn dieses Synchronisierbit SB aufgrund von Störungen verfälscht ist. Eine Neusynchronisation findet nur statt, wenn erstens mehrmals festgestellt wird, daß das Synchronisiersignal SS nicht synchron ist zum Synchronisierbit SB, und wenn zweitens mehrmals festgestellt wird, daß der Suchzähler SZ synchron ist zu einem "anderen" Synchronisierbit SB.

Im folgenden wird die Wirkungsweise der in der Figur dargestellten Schaltungsanordnung erläutert.

Es wird von einem Zustand der Erstsynchronisation ausgegangen, bei dem der von der Datenquelle DQ abgegebene Datenstrom DS über das erste und das zweite And-Gatter AD1, AD2 am Eingang E des Schieberegisters SR anliegt. Das Schieberegister SR weist ebensoviele Bitplätze auf, wie Bits in einem Rahmen enthalten sind. Die Anzahl der Bitplätze bzw. der Bits im Rahmen kann beispielsweise zwischen 68 und 1080 variieren.

Im zweiten And-Gatter AD2 findet eine UND-Verknüpfung zwischen einem Bit im Datenstrom DS und dem vom Ausgang A des Schieberegisters SR abgegebenen Bit statt. Dieses Bit gelangt über das Or-Gatter OD zum anderen Eingang des zweiten And-Gatters AD2. Die beiden verknüpften Bits sitzen jeweils in ihren Rahmen auf den gleichen Bitplätzen. Sitzt beispielsweise das Synchronisierbit S auf dem Bitplatz mit der Nummer 1, so wird die UND-Verknüpfung immer mit dem vom Ausgang A des Schieberegisters SR abgegebenen Synchronisierbit SB und dem gerade vom Datenstrom DS her anliegenden Synchronisierbit SB durchgeführt.

Das Synchronisierbit SB ist beispielsweise durch eine logische "1" markiert. Über das zweite And-Gatter AD2 ist also sichergestellt, daß die zum Synchronisierbit SB gehörende logische "1", sofern es nicht im Datenstrom DS einmal verfälscht ist, das Schieberegister SR durchläuft. Alle anderen Bits im Rahmen sind nicht dauernd auf logisch "1" gesetzt, so daß ihre Bitplätze im Laufe der Zeit mit einer logischen "0" überschrieben werden.

Durch die vom Ausgang A des Schieberegisters SR abgegebenen logischen Einsen wird der Suchzähler SZ immer auf Null gesetzt. Vom Übertragsausgang TC des Suchzählers SZ wird eine logische "1" abgegeben, wenn der Zählerstand des Suchzählers SZ seinen maximalen Wert erreicht hat. Dieser maximale Wert entspricht der Anzahl der Bits im Rahmen, und variiert damit beispielsweise zwischen 68 und 1080. Der Zählerstand des Suchzählers SZ erreicht also nur dann seinen maximalen Wert, wenn im Schieberegister SR nur noch ein Bitplatz mit einer logischen "1" besetzt ist. Dieser Bitplatz entspricht per Definition dem Synchronisierbit SB.

Wenn der Suchzähler SZ synchron ist, das heißt wenn an seinem Übertragsausgang TC ein zum Synchronisierbit SB synchroner Impuls abgegeben wird, zählt der weitere Zähler Z2 vorwärts. In diesem Fall liegen nämlich am Takteingang des D-Flipflops F4 eine ansteigende Flanke, und dazu synchron an seinem Eingang D die logische "1" des Synchronsierbits SB an. Vom invertierenden Ausgang $\bar{Q}$ des D-Flipflops F4 werden jeweils eine logische "0" an den Rücksetzeingang R des weiteren Zählers Z2 gegeben, so daß dieser vorwärts zählt. Nach beispielsweise 16 Impulsen am Übertragsausgang TC des Suchzählers SZ wird vom Übertragsausgang TC des weiteren Zählers Z2 eine logische "1" an den Setzeingang S des zweiten RS-Flipflops F2 gegeben, und damit dessen Ausgang Q auf logisch "1" gesetzt. Es wird hierbei angenommen, daß beim gleichzeitigen Anlegen von logischen Einsen an den Setzeingang S, vom Übertragsausgang TC des weiteren Zählers Z2, und an den Rücksetzeingang R des zweiten RS-Flipflops F2 vom Ausgang Q des D-Flipflops F4, der Ausgang Q des zweiten RS-Flipflops F2 auf logisch "1" gesetzt wird. Mit dem nächsten Impuls am Übertragsausgang TC des Suchzählers SZ wird der Ausgang Q des zweiten RS-Flipflops dann auf logisch "0" gesetzt.

In diesem Fall liegen an den Eingängen des fünften And-Gatters AD5 logische Einsen an, einmal vom Ausgang Q des zweiten RS-Flipflops F2, und einmal vom minimalen Übertragsausgang TC0 des Gewichtungszählers GZ her. Dieser Gewichtungszähler GZ weist immer noch als Zählerstand den Wert Null auf, da an seinem Zählrichtungseingang ZE eine logische "0" anliegt, die von der logischen "0" des Synchronisiersignals SS herrührt, die vom Übertragsausgang TC des Arbeitszählers AZ abgegeben wird. Die logische "0" am Zählrichtungseingang ZE des Gewichtungszählers GZ bewirkt, daß dieser abwärts zählt. Wie aber schon erwähnt wurde, kann der Zählerstand den Wert Null nicht unterschreiten.

In diesem Fall liegt am Rücksetzeingang R des ersten RS-Flipflops F1 eine logische "1" an, die von dessen invertierenden Ausgang $\overline{Q}$ an den anderen Eingang des dritten And-Gatters AD3 gegeben wird. Hierdurch wird bewirkt, daß der Zählerstand des Suchzählers SZ vom Arbeitszähler AZ übernommen wird. Anders ausgedrückt, vom Übertragsausgang TC des Suchzählers SZ wird der Arbeitszähler AZ auf den Wert Null gesetzt, so daß beide synchron zueinander hochzählen.

Solange das vom Übertragsausgang TC des Arbeitszähler AZ abgegebene Synchronisiersignal SS synchron ist zum Synchronisierbit SB im Datenstrom DS, wird vom vierten And-Gatter AD4 eine logische "1" an den Zählrichtungseingang ZE des Gewichtungszählers GZ gegeben. Hierdurch wird bewirkt, daß der Zählerstand des Gewichtungszählers GZ mit jeder ansteigenden Flanke des Datentaktes DT um beispielsweise drei erhöht wird. Gleichzeitig wird über das am anderen invertierenden Eingang des ersten And-Gatters AD1 anliegende Synchronisiersignal SS bewirkt, daß das Synchronisierbit SB im Datenstrom DS nicht mehr an den Eingang E des Schieberegisters SR gelangt.

Solange also das vom Übertragsausgang TC des Arbeitszählers AZ abgegebene Synchronisiersignal SS synchron ist zum Synchronisierbit SB im Datenstrom DS wird der Zählerstand des Gewichtungszählers GZ bis zu dessen Maximalwert erhöht. Wenn der Zählerstand beispielsweise den Wert 16 angenommen hat, wird vom maximalen Übertragsausgang TC16 des Gewichtungszählers GZ eine logische "1" an den Setzeingang S des ersten RS-Flipflops F1 gegeben, worauf von dessen invertierenden Ausgang $\overline{Q}$ eine logische "0" an den anderen Eingang des dritten And-Gatters AD3 gegeben wird. Hierdurch wird die Verbindung zwischen dem Übertragsausgang TC des Suchzählers SZ und dem Rücksetzeingang R des Arbeitszählers AZ aufgetrennt.

Bis zum maximalen Zählerstand des Gewichtungszählers GZ sind der Suchzähler SZ und der Arbeitszähler AZ über das dritte And-Gatter AD3 verbunden. Da vom Synchronisiersignal SS das Synchronisierbit SB im Datenstrom DS ausgeblendet wird, durchlaufen nach der ersten Abgabe des Synchronisiersignals SS nur noch logische Nullen das Schieberegister SR. Wie später erläutert wird, wird daraufhin das Schieberegister SR mit den Bits des Datenstroms DS, weiterhin ohne das Synchronisierbit SB, aufgefüllt. In beiden Fällen, wo logische Nullen oder die Bits des Datenstromes DS das Schieberegister SR durchlaufen, wird vom Arbeitszähler AZ das Synchronisiersignal SS unverändert abgegeben.

Nur in dem Fall, in dem der Suchzähler SZ ein "anderes" Synchronisierbit SB findet, und der Gewichtungszähler GZ seinen maximalen Zählerstand noch nicht erreicht hat, wird der Arbeitszähler AZ auf das "neue" Synchronisierbit SB synchronisiert. Der Gewichtungszähler GZ erreicht seinen maximalen Zählerstand dann nicht, wenn das "alte" Synchronisierbit SB kein Synchronisierbit SB war, oder über längere Zeit verfälscht wird. In diesem Fall liegt über das vierte And-Gatter AD4 eine logische "0" am Zählrichtungseingang ZE des Gewichtungszählers GZ, worauf dieser seinen Zählerstand mit jeder Flanke des Datentaktes DT beispielsweise um eins erniedrigt.

Wie schon beschrieben wurde, wird durch das vom Arbeitszähler AZ abgegebene Synchronisiersignal SS das Synchronisierbit SB im Datenstrom DS für den Eingang E des Schieberegisters SR ausgeblendet. Die Bitplätze des Schieberegisters SR werden also nur noch von logischen Nullen durchlaufen. Durch die vom Ausgang A des Schieberegisters SR abgegebenen logischen Nullen wird der Zähler Z1 über dessen Rücksetzeingang R nicht mehr zurückgesetzt. Der maximale Zählerstand des Zählers Z1 entspricht der Anzahl der Bitplätze im Schieberegister SR und variiert damit zwischen 68 und 1080. Nach Erreichen seines maximalen Zählerstandes wird vom Übertragsausgang TC des Zählers Z1 eine logische "1" an den Setzeingang S des dritten RS-Flipflops F3 gegeben, wodurch von dessen Ausgang Q eine logische "1" über das Or-Gatter OD an den anderen Eingang des zweiten And-Gatters AD2 gegeben wird. Durch diese logische "1" wird bewirkt, daß in das Schieberegister SR wieder die Bits des Datenstromes DS geschrieben werden. Wie schon beschrieben wurde, wird innerhalb eines Rahmens nur das Synchronisierbit SB nicht an den Eingang E des Schieberegisters SR gegeben. Sobald die erste logische "1" des Datenstromens DS vom Ausgang A des Schieberegisters SR abgegeben wird, wird über den Rücksetzeingang R des dritten RS-Flipflops F3 dessen Ausgang Q wieder auf logisch "0" gesetzt, so daß der gleiche Vorgang abläuft, wie er zu Beginn der Erstsynchronisation beschrieben wurde. Es wird hier noch einmal darauf hingewiesen, daß der Suchzähler SZ nicht mehr von dem Synchronisierbit SB im Datenstrom DS zurückgesetzt werden kann, zu dem der Arbeitszähler AZ sein synchrones Synchronisiersignal SS abgibt.

Ausgehend vom Zustand des Synchronismus können im wesentlichen zwei verschiedene Fälle auftreten.

In einem ersten Fall wird das Synchronisierbit SB im Datenstrom DS verfälscht. Hierdurch wird bewirkt, daß vom vierten And-Gatter AD4 eine logische "0" an den Zählrichtungseingang ZE des Gewichtungszählers GZ gegeben wird, da synchron zum Synchronisiersignal SS an dem einen Eingang des vierten And-Gatters AD4 das verfälschte Synchronisierbit SB, d.h. eine logische "0" anliegt. Durch die logische "0" am Zählrichtungseingang ZE des Gewichtungszählers GZ wird dessen Zählerstand mit jeder ansteigenden Flanke des Datentaktes DT um beispielsweise eins erniedrigt. Wenn das Synchronisierbit SB im Datenstrom DS laufend verfälscht ist, erreicht der Zählerstand des Gewichtungszählers GZ einmal den Wert Null, d. h. von dessen minimalen Übertragsausgang TC0 wird eine logische "1" abgegeben. In diesem Fall liegen an den Eingängen des fünften And-Gatters AD5 diese logische "1", sowie die vom Ausgang Q des zweiten RF-Flipflops F2 abgegebene logische "0". Das bedeutet, daß das erste RS-Flipflop F1 nicht zurückgesetzt wird, und der Arbeitszähler AZ weiterhin das bisherige Synchronisiersignal SS abgibt.

In einem zweiten Fall wird angenommen, daß beispielsweise durch Bitschlupf das Synchronisierbit SB im Datenstrom DS seine Lage gegenüber dem Synchronisiersignal SS geändert hat. Das zum Übertragsausgang TC des Arbeitszählers AZ abgegebene Synchronisiersignal SS ist nicht mehr synchron zum Synchronisierbit SB, und daher wird vom vierten And-Gatter AD 4 eine logische "0" an den Zählrichtungseingang ZE des Gewichtungszählers GZ gegeben. Wie im ersten Fall schon ausgeführt, wird von dessen minimalen Übertragsausgang TC0 nach einiger Zeit eine logische "1" an den einen Eingang des fünften And-Gatters AD5 gegeben.

Wie bei der Erstsynchronisation schon beschrieben wurde, wird auch in diesem Fall nach einiger Zeit der Suchzähler SZ auf das "neu" Synchronisierbit SB synchronisiert. Wenn vom Übertragsausgang TC des Suchzählers SZ sechzehn zum Synchronisierbit SB synchrone Impulse abgegeben worden sind, wird wie bei der Erstsynchronisation über den Übertragsausgang TC des weiteren Zählers Z2 der Ausgang Q des zweiten RS-Flipflops F2 auf logisch "1" gesetzt. In diesem Fall liegen an beiden Eingängen des fünften And-Gatters AD5 logische Einsen an, so daß der invertierende Ausgang Q des ersten RS-Flipflops F1 auf logisch "1" gesetzt wird, und somit der Zählerstand des Suchzählers SZ vom Arbeitszähler AZ übernommen wird.

Wenn der Arbeitszähler AZ also einmal ein Synchronisiersignal SS abgibt, dann müssen für eine Neusynchronisation folgende zwei Kriterien erfüllt sein. Erstens muß über mehrere Rahmenlängen hinweg festgestellt werden, daß das Synchronisiersignal SS des Arbeitszähler AZ nicht synchron ist zum Synchronisierbit SB im Datenstrom DS, und zweitens muß der Suchzähler SZ über mehrere Rahmenlängen hinweg an seinem Übertragsausgang TC ein zum "neuen" Synchronisierbit SB synchronen Impuls abgeben.

Der Zähler Z1 und das dritte RS-Flipflop F3 sorgen zusammen mit dem Or-Gatter OD dafür, daß bei einem vom Arbeitszähler AZ abgegebenen Synchronisiersignal SS, das synchron ist zum Synchronisierbit SB - in diesem Fall durchlaufen nur logische Nullen das Schieberegister SR - das über eine Rahmenlänge hinweg mit neuen Bits des Datenstromes DS geladen wird.

Durch die integrierende Wirkung des Gewichtungszählers GZ wird die überwiegende Koinzidenz des Synchronisiersignals SS mit dem Synchronisierbit SB gegenüber einem stochastischen Signal bewertet, und somit eine laufende Neusynchronisation bei periodischen Verfälschungen des Synchronisierbits SB vermieden. Die Zählerstandserhöhung um 3 und die Zählerstandserniedrigung um 1 beim Gewichtungszähler GZ ist empirisch ermittelt. Diese ist abhängig von Störungen und von den Gegebenheiten des Übertragungsweges.

Es ist auch mit dem erfindungsgemäßen Verfahren möglich, statt des einen Synchronisierbits SB eine aus mehreren Bits bestehende Synchronisierinformation zu verwenden. Hierbei ist beispielsweise dem Or-Gatter OD ein weiteres, hier nicht dargestelltes Schieberegister nachgeschaltet. Die parallelen Ausgänge dieses Schieberegisters sind über eine Verknüpfungslogik am Rücksetzeingang R des Suchzählers SZ angeschaltet. Solange im weiteren Schieberegister nicht einmal pro Rahmen die Synchronisierinformation steht, erreicht der Suchzähler SZ nicht seinen vorgegebenen, maximalen Zählerstand.

## Patentansprüche

1. Verfahren zur Rahmendekodierung, insbesondere in einem Multiplexer-Demultiplexersystem zur Digitalsignal-Übertragung, wobei ein serieller Datenstrom (DS) eine Rahmenstruktur mit einer periodisch auftretenden, den Beginn jedes Rahmens kennzeichnenden Synchronisierinformation aufweist, mit einer Rahmenerkennungsschaltung (Suchzähler SZ), die auf die periodisch auftretende Synchronisierinformation synchronisiert wird, ein zur Synchronisierinformation synchrones Synchronisiersignal (SS) wird vom Rahmengenerator abgegeben, und laufend auf Einhaltung der Synchronkoinzidenz überprüft wird, dadurch gekennzeichnet, daß nach einer vorbestimmten Anzahl von richtig erkannten Synchronisierinformationen ein Rahmengenerator (Arbeitszähler AZ) mit der Rahmenerkennungsschaltung gekoppelt wird, daß der Zählerstand eines Gewichtungszählers (GZ) bei Synchronkoinzidenz laufend ein oder mehrstufig erhöht wird und bei Nichtkoinzidenz mindestens einstufig erniedrigt wird, wobei ein minimaler Zählerstand nicht unter, und ein maximaler Zählerstand nicht überschritten werden kann, daß bei Erreichen des maximalen Zählerstandes des Gewichtungszählers (GZ) der Rahmengenerator von der Rahmenerkennungsschaltung entkoppelt wird, daß die Rahmenerkennungsschaltung fortlaufend im Datenstrom (DS) unter Ausblendung der im Rahmengenerator geführten Synchronisierinformation nach einer weiteren Synchronisierinformation sucht, und daß eine Neusynchronisation des Rahmengenerators auf die Rahmenerkennungsschaltung nur durchgeführt wird, wenn der Zählerstand des Gewichtungszählers (GZ) seinen minimalen Zählerstand erreicht hat, und die Rahmenerkennungsschaltung die vorbestimmte Anzahl von Synchronisierinformationen richtig erkannt hat.

2. Verfahren nach Anspruch 1,
**dadurch gekennzeichnet,**
daß die Rahmenerkennungsschaltung ein Suchzähler (SZ) und der Rahmengenerator ein Arbeitszähler (AZ) ist.

3. Verfahren nach Anspruch 2,
**dadurch gekennzeichnet,**
daß als Synchronisierinformation ein einzelnes Synchronisierbit (SB) verwendet wird,
daß der Datenstrom (DS) ein Schieberegister (SR) durchläuft,
daß die an einem Ausgang (A) des Schieberegisters (SR) abgreifbaren Bits, die eine bestimmte Bitposition innerhalb des Rahmens einnehmen, über ein And-Gatter (AD2) mit den Bits des Datenstromes (DS) verknüpft werden, die die gleiche Bitposition einnehmen,
daß das Verknüpfungsergebnis einem Eingang (E) des Schieberegisters (SR) zugeführt wird, wodurch nach mehreren Rahmenlängen nur noch das Synchronisierbit (SB) das Schieberegister (SR) durchläuft, und daß der Suchzähler (SZ), dessen maximaler Zählerstand der Bitanzahl im Rahmen entspricht, von dem vom Ausgang A des Schieberegisters (SR) abgegebenen logischen Einsen zurückgesetzt wird, wobei bei nur noch einem auf logisch "1" gesetzten Bit im Schieberegister (SR), dem Synchronisierbit (SB), vom Übertragsausgang (TC) des Suchzählers (SZ) ein zu diesem Synchronisierbit (SB) synchroner Impuls abgegeben wird.

4. Verfahren nach einem der Ansprüche 1 bis 3,
**dadurch gekennzeichnet,**
daß der Zählerstand des Gewichtungszählers (GZ) dreistufig erhöht und einstufig erniedrigt wird.

## Claims

1. Method of frame decoding, in particular in a multiplex-demultiplex system for digital signal transmission, a serial data stream (DS) having a frame structure with a periodically occurring item of synchronizing information which marks the start of each frame, having a frame recognition circuit (search counter SZ) which is synchronized to the periodically occurring item of synchronizing information, a synchronizing signal (SS) which is synchronous with the item of synchronizing information is emitted by the frame generator and is continuously tested to establish that the synchronous coincidence is maintained, characterised in that, after a predetermined number of correctly recognised items of synchronizing information, a frame generator (working counter AZ) is coupled to the frame recognition circuit, in that the counter reading of a weighting counter (GZ) is continuously increased by one or more increments in the case of synchronous coincidence and in the case of non-coincidence is reduced by at least one increment, it being impossible for a minimum counter reading to be undershot and for a maximum counter reading to be exceeded, in that, on reaching the maximum counter reading of the weighting counter (GZ), the frame generator is decoupled from the frame recognition circuit, in that the frame recognition circuit continuously searches in the data stream (DS) while masking out the item of synchronizing information carried in the frame generator for a further item of synchronizing information, and in that a resynchronization of the frame generator to the frame recognition circuit is only carried out if the counter reading of the weighting counter (GZ) has reached its minimum counter reading and the frame recognition circuit has correctly recognized the predetermined number of items of synchronizing information.

2. Method according to Claim 1, characterized in that the frame recognition circuit is a search counter (SZ) and the frame generator is a working counter (AZ).

3. Method according to Claim 2, characterized in that a single synchronizing bit (SB) is used as the item of synchronizing information, in that the data stream (DS) passes through a shift register (SR), in that the bits which can be tapped at an output (A) of the shift register (SR) and which occupy a certain bit position within the frame are logically combined via an And gate (AD2) with the bits of the data stream (DS) which occupy the same bit position, in that the combination result is fed to an input (E) of the shift register (SR), as a result of which, after a plurality of frame lengths, only the synchronizing bit (SB) passes through the shift register (SR), and in that the search counter (SZ), the maximum counter reading of which corresponds to the number of bits in the frame, is reset by the logic "1" emitted by the output A of the shift register (SR), when only one bit is set at logic "1" in the shift register (SR), a pulse which is synchronous to said synchronizing bit (SB) being emitted from the carry output (TC) of the search counter (SZ).

4. Method according to one of Claims 1 to 3, characterized in that the counter reading of the weighting counter (GZ) is increased by three increments and reduced by one increment.

## Revendications

1. Procédé de décodage de trames, notamment dans un système à multiplexeur/démultiplexeur pour la transmission de signaux numériques, et selon lequel un flux de données en série (DS) possède une structure de trames comportant une information de synchronisation apparaissant périodiquement et caractérisant le début de chaque trame, avec un circuit d'identification des trames (compteur de recherche SZ), qui est synchronisé sur l'information de synchronisation apparaissant périodiquement, un signal de synchronisation (SS), synchrone avec l'information de synchronisation, est délivré par le générateur de trames et contrôlé en permanence pour voir si la coïncidence de synchronisation est respectée, caractérisé par le fait qu'après un nombre prédéterminé d'informations de synchronisation identifiées comme étant correctes, un générateur de trames (compteur de travail RZ) est accouplé au circuit d'identification des trames, que l'état de comptage d'un compteur de pondération (GZ) est accru en permanence d'un échelon ou de plusieurs échelons dans le cas d'une coïncidence de synchronisation et est réduit au moins d'un échelon dans le cas d'une non coincidence, l'état de comptage ne pouvant pas tomber au-dessous d'un état de comptage minimum ni dépasser un état de comptage maximum, que, lorsque l'état de comptage maximum du compteur de pondération (GZ) est atteint, le générateur de trames est découplé par rapport au circuit d'identification des trames, que le circuit d'identification des trames recherche en permanence, dans le flux de données (DS), moyennant la suppression de l'information de synchronisation envoyée dans le générateur de trames, une autre information de synchronisation, et qu'une nouvelle synchronisation du générateur de trames sur le circuit d'identification des trames n'est exécutée que lorsque l'état de comptage du compteur de pondération (GZ) a atteint son état de comptage minimum et que le circuit d'identification des trames a identifié correctement le nombre prédéterminé d'informations de synchronisation.

2. Procédé suivant la revendication 1, caractérisé par le fait que le circuit d'identification des trames est un compteur de recherche (SZ) et que le générateur de trames est un compteur de trames (AZ).

3. Procédé suivant la revendication 2, caractérisé par le fait qu'on utilise comme information de synchronisation un bit individuel de synchronisation (SB), que le flux de données (DS) traverse un registre à décalage (SC), que les bits, qui peuvent être prélevés sur une sortie (A) du registre à décalage (SR) et prennent une position binaire prédéterminée à l'intérieur de la trame, sont combinés, par l'intermédiaire d'une porte ET (AD2), aux bits du flux de données (DS), qui prennent la même position binaire, que le résultat de la combinaison est envoyé à une entrée (E) du registre à décalage (SE), ce qui a pour effet qu'au bout de plusieurs longueurs de trames, seul encore le bit de synchronisation (SB) traverse le registre à décalage (SR), et que le compteur de recherche (SZ), dont l'état de comptage maximum correspond au nombre des bits dans la trame, est ramené à zéro par les uns logiques délivrés par la sortie A du registre à décalage (SR), auquel cas dans le cas où il existe encore un bit positionné sur le "1" logique dans le registre a décalage (SR), a savoir le bit de synchronisation (SB), une impulsion synchrone a ce bit de synchronisation (SB) est délivrée par la sortie de report (TC) du compteur de recherche SZ).

4. Procédé selon l'une des revendications 1 à 3, caractérisé par le fait que l'étage de comptage du compteur de pondération (GZ) est accru de trois échelons et est réduit d'un échelon.